# EUROPEAN PATENT SPECIFICATION

(11) **EP 4 130 979 B1**
(45) Date of publication and mention of the grant of the patent: **01.07.2026**
(21) Application number: 22198050.1
(22) Date of filing: 10.09.2019
(51) Int. Cl.: G06F 8/38, G06F 9/451, G06F 9/52, G06F 3/0485, G06F 3/048, G06F 15/173, G06F 15/16, H04L 67/00

(54) **DYNAMIC OBJECT UPDATE SUBSCRIPTIONS BASED ON USER INTERACTIONS WITH AN INTERFACE**
DYNAMISCHE OBJEKTAKTUALISIERUNGSSUBSKRIPTIONEN AUF BASIS VON BENUTZERINTERAKTIONEN MIT EINER SCHNITTSTELLE
ABONNEMENTS DE MISE À JOUR DYNAMIQUE D'OBJETS BASÉS SUR DES INTERACTIONS D'UTILISATEUR AVEC UNE INTERFACE

(30) Priority: 10.09.2018 US 201862729180 P; 31.10.2018 US 201816176851; 30.11.2018 US 201816206553; 11.07.2019 US 201916509231
(43) Date of publication of application: 08.02.2023
(62) Divisional of application: 19196553.2
(73) Proprietor: Salesforce, Inc., San Francisco, CA 94105 (US)
(72) Inventor: LARGMAN, Raissa, San Francisco, 94105 (US); KLYM, Jason, San Francisco, 94105 (US); GLINENKO, Danil, San Francisco, 94105 (US); WALKER, Neil, San Francisco, 94105 (US); CHRISTIAN, Mark, San Francisco, 94105 (US); MOURACHOV, Serguei, San Francisco, 94105 (US)
(74) Representative: Bryn-Jacobsen, Caelia

(56) References cited:
- US-A1- 2009 327 292
- US-A1- 2010 058 248

## Description

### CROSS-REFERENCE TO RELATED APPLICATIONS

This patent application is a continuation of U.S. Appl. Ser. No. 16/176,851, filed October 31, 2018, which claims priority from U.S. Provisional Appl. Ser. No. 62/729,180, filed September 10, 2018.

### Technical Field

The present invention relates to computer-implemented methods, client devices, and computer-readable media for dynamically maintaining object updates stored on a client device.

### BACKGROUND

Systems have been provided for disseminating published updates to objects among a plurality of client devices via an at least partially centralized messaging system.

Through applied effort, ingenuity, and innovation many deficiencies of such systems have been solved by developing solutions that are in accordance with the implementations of the present invention, many examples of which are described in detail herein.

US2010/058248A1 discloses a graphical user interface for building management systems that does not update all widgets at all times. Instead, it selectively updates and renders only those widgets that are currently visible or are anticipated to become visible within a 3D graphical object, such as a carousel. This selective updating approach optimizes system performance and resource usage by avoiding unnecessary updates to non-visible widgets. US 2009/327292 A1 relates to a a data subscription system and discloses a Consistency enforcing method for shared copies of data element in computing environment, involves sending request to server to subscribe aspect of data element, and receiving actual value of data element from server in response to request.

### BRIEF SUMMARY

The present invention is set out in the independent claims, with some optional features set out in the claims dependent thereto.

Maintaining dynamic topic subscriptions configured for managing content transmission for client devices may significantly decrease the amount of data transmitted over a network from a message distribution system (e.g., such as a group-based communication platform) to individual client devices. To maintain desired user functionality and real-time updates of topics (e.g., objects) of interest to a user of a particular client device, the subscriptions may be dynamically adjusted based on user interactions with an interface of the client device. For example, the client device may be configured to request subscriptions for object updates relating to objects currently visible within a client device interface.

### BRIEF DESCRIPTION OF THE SEVERAL VIEWS OF THE DRAWINGS

Reference will now be made to the accompanying drawings, which are not necessarily drawn to scale, and wherein:
FIG. 1 shows a schematic view of a group-based communication platform in communication with client devices according to another implementation;
FIG. 2 shows a schematic view of a message distribution server according to one implementation;
FIG. 3 shows a schematic view of an interface computing entity according to one implementation;
FIG. 4 shows a schematic view of data transmission interactions between display windows of a group-based communication interface, according to one implementation; and
FIGS. 5-6 are flowcharts illustrating the functionality of various computing entities according to various implementations.

### DETAILED DESCRIPTION

The present disclosure more fully describes various implementations with reference to the accompanying drawings. It should be understood that some, but not all implementations are shown and described herein. Indeed, the implementations may take many different forms, and accordingly this disclosure should not be construed as limited to the implementations set forth herein. Rather, these implementations are provided so that this disclosure will satisfy applicable legal requirements. Like numbers refer to like elements throughout.

### Overview

As the number of objects (e.g., users, files, topics, and/or the like) monitored by individual users of a group-based communication platform increases, the processing burdens placed on client devices used by those users increases, and the network traffic between the user's client device and the group-based communication platform increases to ensure that the user's client device receives all updates relating to the monitored objects. These technical problems are particularly acute in real-time messaging contexts, in which these object-based updates are disseminated to client devices in real-time, as the updates occur. In the most extreme cases in which a single user (and associated client device) monitors a large number of objects, object updates may be transmitted to the client device almost constantly.

In many cases, updates regarding objects that a user has little interest in following, and/or updates to objects that a user is not presently reviewing (e.g., objects represented in hidden or otherwise undisplayed portions of a user interface) may go entirely unnoticed by the user for a lengthy period of time. Pragmatically, individual users are unable to mentally comprehend a large number of object updates simultaneously, and accordingly some object updates may be demoted to a lower level of priority than other object updates.

Various implementations utilize a dynamic subscription-based model to decrease the number of object updates that are relayed to a user at a given time. Only updates relating to objects to which a user is currently subscribed, among the plurality of objects the user has access to, are transmitted to a client device of the user, thereby decreasing the amount of network traffic flowing between the group-based communication platform and the client device. These subscriptions are based on user interactions with the client device, and therefore the client device is configured to generate subscription modification requests that are sent to the group-based communication platform that can dynamically maintain subscription data for each of the client devices based at least in part on the received subscription modification requests. Subscription data identifies subscribed objects of the plurality of objects for each of one or more client devices. The subscription modification request is as subscribe requests and unsubscribe requests relating to various objects based on the occurrence of one or more trigger events at the client device. Those trigger events may be user-interaction-based, and may be considered proxies for a user's interest level in a particular object. For example, moving a particular object into a visible field of view of the user interface, for example, by moving an object across a boundary of the visible field of view of the user interface (e.g., scrolling until the object is visible) on the client device may be considered a trigger event utilized by the client device to generate and send a subscribe request for the object, and the corollary of moving an object out of a visible field of view of the user interface, for example, by moving an object across a boundary of the visible field of view of the user interface (e.g., scrolling until the object is no longer visible) is considered a trigger event utilized by the client device to generate and send an unsubscribe request for the object. When an object is made visible in any way, a subscription modification request like a subscribe request is generated. The subscription data maintain at the group-based communication platform will consequently identify objects visible within the graphical user interface field of view of the client device. By automating subscription to objects based on their visibility, the present system not only decreases the number of object updates that are relayed to a user at a given time, as mentioned before, but also enables a user to interact with visible objects that are up-to-date, thereby mitigating the risk of working on an obsolete version of an object. Other trigger events may be utilized as well, such that updates regarding background objects (e.g., objects not currently in a visible field of view) may be transmitted to the client device under appropriate circumstances. The triggers can be seen as data identifying changes to identified objects displayed within a graphical user interface of a client device. Using the example above of moving an object across a field of view of the user interface, the client device is then configured to generate a subscription modification request comprising data identifying changes to selected/identified objects displayed within a graphical user interface field of view of the client device. The data identifying changes could be e.g. data identifying objects moved across a graphical user interface field of view border of the client device. Those subscribe/unsubscribe requests may be generated and transmitted by the client devices in real-time to ensure that accurate and up-to-date object subscriptions are maintained at the group-based communication platform. By consequence, only object updates relating to objects currently deemed of interest to a particular user are transmitted to the user's client device at any given time.

Subscription data indicative of object subscriptions for individual client devices may be stored at the group-based communication platform (e.g., in a memory storage area accessible to one or more message distribution servers) and may be updated in real-time based on subscription modification requests received from the client devices. This stored subscription data is maintained and used by message distribution servers of the group-based communication platform to filter the object updates to be transmitted to the client devices, such that only those updates relating to subscribed objects are transmitted to the client devices. As discussed in greater detail herein, the object updates are transmitted through an interface computing entity located at the group-based communication platform. The subscription data maintained by the group-based communication platform, as seen later, comprises a subscription list for each individual client device. A subscription list for an individual client device may comprise object identifiers corresponding to subscribed objects among a plurality of available objects. The subscription data may also identify visible objects of the plurality of objects within the graphical user interface field of view of a client device, e.g. when the subscription modification request corresponds to a trigger associated to a particular object moved across a boundary of the visible field of view of the user interface and into this visible field.

### Definitions

As used herein, the terms "data," "content," "information," and similar terms may be used interchangeably to refer to data capable of being transmitted, received, and/or stored in accordance with implementations of the present invention. Further, where a computing device is described herein to receive data from another computing device, it will be appreciated that the data may be received directly from another computing device or may be received indirectly via one or more intermediary computing devices, such as, for example, one or more servers, relays, routers, network access points, base stations, hosts, and/or the like. Similarly, where a computing device is described herein to send data to another computing device, it will be appreciated that the data may be sent directly to another computing device or may be sent indirectly via one or more intermediary computing devices, such as, for example, one or more servers, relays, routers, network access points, base stations, hosts, and/or the like.

The term "user" should be understood to refer to an individual, a group of individuals, business, organization, and the like. Users may access a group-based communication or messaging system using client devices. "Group-based" is used herein to refer to a system, channel, message, or virtual environment that has security sufficient such that it is accessible only to a defined group of users. The group may be defined by common access credentials such as those of an organization or commercial enterprise. Access may further be facilitated by a validated request to join or an invitation to join transmitted by one group member user to another non-member user. Group identifiers (defined below) are used to associate data, information, messages, etc., with specific groups.

The terms "user profile," "user account," and "user account details" refer to information associated with a user, including, for example, a user identifier, one or more communication channel identifiers (e.g., group-based communication channel identifiers) associated with communication channels (e.g., group-based communication channels) that the user has been granted access to, one or more group identifiers for groups with which the user is associated, an indication as to whether the user is an owner of any group-based communication channels, an indication as to whether the user has any group-based communication channel restrictions, a plurality of messages, a plurality of emojis, a plurality of conversations, a plurality of conversation topics, an avatar, an email address, a real name (*e.g.,* John Doe), a username (*e.g.,* jdoe), a password, a time zone, a status, and the like. The user account details can include a subset designation of user credentials, such as, for example, login information for the user including the user's username and password.

The term "client device" refers to computer hardware(s) and/or software(s) that is/are configured to access one or more services made available by one or more servers. The server(s) is/are often (but not always) on another computer system, in which case the client device accesses the service by way of a network. A client device may be associated with a group identification, where the group identification is an electronic indication that suggests a group (*e.g.,* user group) that the user belongs to. Client devices may include, without limitation, smart phones, tablet computers, laptop computers, desktop computers, wearable devices, personal computers, enterprise computers, and the like.

The term "group-based communication platform" refers to a collection of computing services that are accessible to one or more client devices, and that are operable to provide access to a plurality of software applications related to operations of databases. In some examples, the group-based communication platform may take the form of one or more central servers disposed in communication with one or more additional servers running software applications, and having access to one or more databases storing digital content items, application-related data, and/or the like.

The term "communication channel" refers to an information route and associated circuitry that is used for data exchange between and among systems and parts of systems. For example, a communication channel may be established between and among various client devices, allowing these client devices to communicate and share data between and among each other. These communication channels may be "group-based communication channels" established between and among a select group of client devices (and their respective users) for sharing messages among all users of the group. The communication channels may also and/or alternatively be one-to-one, direct message communication channels established between and among two client devices (and their respective users) for sharing messages among only those two users.

Multiple communication channels may operate on each of one or more computing devices, and therefore a communication channel identifier may be assigned to a communication channel, which indicates the physical address in a database where related data of that communication channel is stored and which is utilized to identify client devices that participate within the communication channel to receive data exchanged on the communication channel. The communication channel identifier therefore ensures communication channels remain distinct and separate even on computing devices associated with a plurality of communication channels.

A communication channel may be "public," which may allow any client device to join and participate in the information sharing through the communication channel. A communication channel may be "private," which may restrict data communications in the communication channel to certain client devices and/or users.

The term "group-based communication channel interface" refers to a virtual communications environment or feed that is configured to display messaging communications posted by channel members (*e.g*., validated users accessing the environment using client devices) that are viewable only to the members of the group. The format of the group-based communication channel interface may appear differently to different members of the group-based communication channel; however, the content of the group-based communication channel interface (*i.e.,* messaging communications) will be displayed to each member of the group-based communication channel. For instance, a common set of group-based messaging communications will be displayed to each member of the respective group-based communication channel such that the content of the group-based communication channel interface (*i.e.,* messaging communications) will not vary per member of the group-based communication channel.

In certain implementations, portions of the group-based communication channel interface may be distinguished based on visibility. The group-based communication channel interface is characterized by a visible field of view surrounded by a visible field of view boundary comprising contents actually displayed. Other contents of the group-based communication channel interface may be hidden from view of the user. As a specific example, a long feed of content may be scrollable, such that only a portion of the long feed of content is displayed within the group-based communication channel interface at a given time. As the user scrolls through the feed of content, the visible portion changes in synchronization with the user's scrolling interaction with the group-based communication channel interface, and accordingly various objects move across the visible field of view boundary between the visible field of view and hidden portions of the group-based communication channel interface.

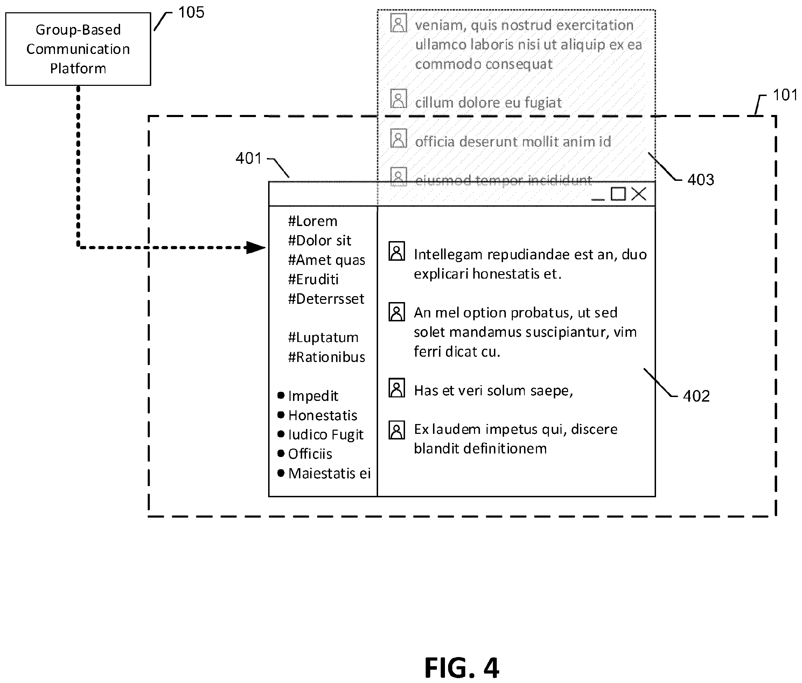

In certain implementations, the visible portion of the group-based communication channel interface may comprise multiple visible panes within a display window, as shown in FIG. 4, for example. In certain implementations, each display pane may be configured to display specific data types. For example, a left-most pane may provide a listing of channels and/or direct messages available to a user and a right-most (or center pane, in a 3-pane configuration) may display the content of a particular channel in which messages are exchanged, including displaying all of those displayed messages. The content of the center pane may be presented as a scrollable feed such that the contents may be scrolled between not-visible portions of the pane (e.g., scrolled above or below the visible portion) and visible portions of the pane, in certain implementations. In implementations in which the main display window comprises 3-panes, the right-most pane may comprise additional data regarding a particular selected message, channel, and/or the like.

As used herein, the terms "messaging communication" and "message" refer to any electronically generated digital content object provided by a user using a client device and that is configured for display within a group-based communication channel interface. Message communications may include any text, image, video, audio, or combination thereof provided by a user (using a client device). For instance, the user may provide a messaging communication that includes text as well as an image and a video within the messaging communication as message contents. In such a case, the text, image, and video would comprise the messaging communication or digital content object. Each message sent or posted to a communication channel (e.g., a group-based communication channel) of the group-based communication system includes metadata comprising the following: a sending user identifier, a message identifier, message contents, an object identifier, a group identifier and/or a group-based communication channel identifier. Each of the foregoing identifiers may comprise ASCII text, a pointer, a memory address, and the like. Messages may be generated and/or edited within an individual pane of a group-based communication interface (a single pane being visible within a particular display window) and/or messages may be generated and/or edited within separate display windows (e.g., separate display windows may be utilized for generating postings to be shared within a communication channel and/or for initiating a call with other users).

The term "object" as used herein may refer to any content source for which updates may be provided and disseminated to one or more client devices. A particular user may be considered an object to other users, such that updates regarding the activities of the particular user may be disseminated to other client devices. Objects may also be embodied as files in certain implementations, such that updates to those files may be disseminated to individual client devices. Updates relating to particular objects may be disseminated from the group-based communication platform (specifically, from a subscription management system in certain implementations) to individual client devices as messages, which may comprise additional metadata identifying a particular object (referred to herein as an "object identifier") to which the updates relate. These object identifiers enable a client device to display the update in association with the appropriate object. In certain implementations, the object identifiers comprise data indicative of the type of object to which the object relates (e.g., a user object, a file object, and/or the like) and may additionally or alternatively comprise data indicative of a unique string (e.g., a unique number, a unique alphanumeric string, and/or the like) that uniquely identifies the object (e.g., among all of objects or among all objects of a particular object type).

In certain implementations, metadata associated with an object may additionally comprise "version identifiers" associated with the object, which are reflective of whether the object is current (up-to-date). The version identifier for an object may be an increasing numeric number, wherein the version identifier increases with each update of the object. However it should be understood that other configurations are possible (e.g., alphanumeric values, hashes, and/or the like).

The terms "group identifier" or "team identifier" refer to one or more items of data by which a group within a group-based communication system may be identified. For example, a group identifier may comprise ASCII text, a pointer, a memory address, and the like.

The terms "group-based communication channel identifier" or "channel identifier" refer to one or more items of data by which a group-based communication channel may be identified. For example, a group-based communication channel identifier may comprise ASCII text, a pointer, a memory address, and the like. In certain implementations, a communication channel (whether public or private) may be available for use between users (and their associated client devices) of a common group/team, although cross-group communication channels may be available between client devices associated with users of separate teams. Thus, a channel identifier may be provided together with one or more group identifiers to specifically identify where data/messages related to the particular communication channel are stored.

A "sending user identifier" is associated with a collection of messages that are sent by a particular user (i.e., a client device associated with the particular user). These messages may be analyzed to determine context regarding the user (e.g., the user's expertise or interest in a topic may be determined based on the frequency of mention of the topic or key words associated with the topic within such messages).

Group-based communication system users are organized into organization groups (e.g., employees of each company may be a separate organization group) and each organization group may have one or more communication channels (e.g., group-based communication channels) to which users may be assigned or which the users may join (e.g., group-based communication channels may represent departments, geographic locations such as offices, product lines, user interests, topics, issues, and/or the like). A group identifier may be used to facilitate access control for a message (e.g., access to the message, such as having the message return as part of search results in response to a search query, may be restricted to those users having the group identifier associated with their user profile). The group identifier may be used to determine context for the message (e.g., a description of the group, such as the name of an organization and/or a brief description of the organization, may be associated with the group identifier).

Group-based communication system users may join and/or create communication channels (e.g., group-based communication channels). Some group-based communication channels may be globally accessible to those users having a particular organizational group identifier associated with their user profile (i.e., users who are members of the organization). Access to some group-based communication channels may be restricted to members of specified groups, whereby the group-based communication channels are accessible to those users having a particular group identifier associated with their user profile. The group-based communication channel identifier may be used to facilitate access control for a message (e.g., access to the message, such as having the message return as part of search results in response to a search query, may be restricted to those users having the group-based communication channel identifier associated with their user profile, or who have the ability to join the group-based communication channel). The group-based communication channel identifier may be used to determine context for the message (e.g., a description of the group-based communication channel, such as a description of a project discussed in the group-based communication channel, may be associated with the group-based communication channel identifier).

The term "private group-based communication channel" refers to a group-based communication channel with restricted access such that it is not generally accessible and/or searchable by other members of the group-based communication system. For example, only those users or administrators who have knowledge of and permission to access (e.g., a group-based communication channel identifier for the private group-based communication channel is associated with their user profile after the user has been validated/authenticated) the private group-based communication channel may view content of the private group-based communication channel.

"Interface computing entities" as discussed herein with reference to various implementations are computing devices (or portions of computing devices) for maintaining communication connections with various client devices. Specifically, interface computing entities may be configured for maintaining websocket connections (or other communication connections) initiated by each of a plurality of client devices for transmitting messages (e.g., object updates) and corresponding metadata (e.g., comprising object identifiers) in real time between message distribution servers of the group-based communication platform and respective client devices.

"Message distribution servers" as discussed herein with reference to certain implementations are computing devices configured for interacting with various client devices (e.g., via an interface computing entity) for receiving and/or disseminating object updates and/or other messages among client devices. Message distribution servers may be configured to receive, generate, store (in an associated database), and/or direct messages received from and/or disseminated to users (e.g., via corresponding client devices). The functionality of the message distribution servers may be provided via a single server or collection of servers having a common functionality, or the functionality of the message distribution servers may be segmented among a plurality of servers or collections of servers performing subsets of the described functionality of the message distribution servers. For example, a first subset of message distribution servers-gateway servers-may be configured for receiving messages from client devices and/or for transmitting messages to client devices via an interface computing entity. These gateway servers may be in communication with a second subset of message distribution servers-channel servers-configured for collecting messages distributed within communication channels and for storing those messages within a message repository database for indexing and archiving. In certain implementations, the channel servers may be in communication with the interface computing entities to provide various messages to client devices.

In certain implementations, message distribution servers may operate as, or in association with a "subscription management system" of the group-based communication platform that interacts with client devices (e.g., via the interface computing entities) for disseminating object updates among client devices both within and outside of the group-based communication platform based on "subscription data" associated with each client device identifying objects to which the client device subscribes. This subscription data may be embodied as a listing of subscribed objects for a particular client device, and objects may be added or removed from the object data, for example, by adding or concatenating an object identifier or removing an object identifier from the subscription data. In certain implementations, the interface computing entities generate and maintain backend connections with one or more message distribution servers as discussed herein for obtaining messages (e.g., object updates) to be disseminated to the various client devices, and the message distribution servers, through the functionality of a subscription management system, provides messages (e.g., object updates) relating to subscribed objects to the interface computing entities for distribution to appropriate client devices.

The subscription management system of certain implementations is dynamic in nature, such that the subscription data for particular client devices may be updated (e.g., in real-time) based on one or more "subscription modification requests" received from corresponding client devices. These subscription modification requests may be embodied as "subscribe requests," in which the client device requests that a new object, not currently represented within the subscription data, is added to the subscription data such that further updates regarding the new object are transmitted to the client device; or "unsubscribe requests," in which the client device requests that an object is removed from the subscription data such that further updates regarding the object are not transmitted to the client device (e.g., until the object is again added to the subscription data as a new object).

In certain implementations, one or more of the interface computing entities and/or the message distribution servers may be geographically distributed, for example, to service client devices located geographically proximate the one or more computing entities. However, in certain implementations the various computing entities (including the interface computing entities and/or the message distribution servers) may be centrally-located.

### Example System Architecture

Methods, apparatuses, and computer program products of the present invention may be embodied by any of a variety of devices. For example, the method, apparatus, and computer program product of an example implementation may be embodied by a network device, such as a server or other network entity, configured to communicate with one or more devices, such as one or more client devices. In some preferred and non-limiting implementations, the computing device may include fixed computing devices, such as a personal computer or a computer workstation. Still further, example implementations may be embodied by any of a variety of mobile devices, such as a portable digital assistant (PDA), mobile phone, smartphone, laptop computer, tablet computer, wearable device, or any combination of the aforementioned devices.

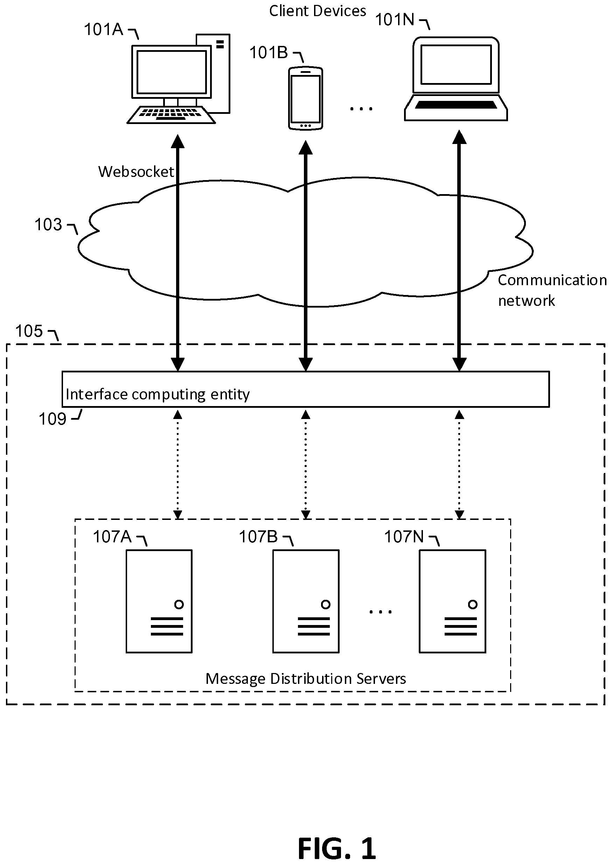

FIG. 1 illustrates example computing systems within which implementations of the present invention may operate. The example computing systems may be seen as a dynamic subscription management system hosting a group-based communication platform 105 to which users may access via a communication network 103 using client devices 101A-101N.

Communication network 103 may include any wired or wireless communication network including, for example, a wired or wireless local area network (LAN), personal area network (PAN), metropolitan area network (MAN), wide area network (WAN), or the like, as well as any hardware, software and/or firmware required to implement it (such as, e.g., network routers, etc.). For example, communication network 103 may include a cellular telephone, an 802.11, 802.16, 802.20, and/or WiMax network. Further, the communication network 103 may include a public network, such as the Internet, a private network, such as an intranet, or combinations thereof, and may utilize a variety of networking protocols now available or later developed including, but not limited to TCP/IP based networking protocols. As discussed herein, the networking protocol is configured to enable data transmission via websocket communications. For instance, the networking protocol may be customized to suit the needs of the group-based communication system. In some implementations, the protocol is a custom protocol of JSON objects sent via a websocket channel. In some implementations, data may be transmitted via a plurality of protocols, such as JSON over RPC, JSON over REST/HTTP, and the like.

In the illustrated implementation, the group-based communication platform 105 includes a plurality of message distribution servers 107A-107N accessible via the communication network 103 via an interface computing entity 109. Collectively, the message distribution servers 107A-107N are configured for receiving messages transmitted from one or more client devices 101A-101N, generating and/or receiving messages indicative of object updates (if applicable), for transmitting messages to appropriate client devices 101A-101N via an interface computing entity 109, and/or the like.

Similarly, the interface computing entity 109 (or plurality of interface computing entities 109) may be embodied as a computer or computers as known in the art. In the illustrated implementation of FIG. 1, the interface computing entity 109 provides for receiving electronic data from various sources, including, but not limited to the client devices 101A-101N (e.g., via websocket communications over the communications network 103) and/or the message distribution servers 107A-107N (e.g., via backend communications). Moreover, the interface computing entity 109 of the illustrated implementation is also configured to parse metadata provided as a portion of one or more electronic messages, and to direct incoming electronic messages to one or more message distribution servers 107A-107N based at least in part on the content of the metadata associated with the electronic messages and/or to direct outbound electronic messages to one or more client devices 101A-101N based at least in part on the content of the metadata associated with the electronic messages.

The client devices 101A-101N may be any computing device as defined above. Electronic message data exchanged between the message distribution servers 107A-107N and the client devices 101A-101N via the interface computing entity 109 may be provided in various forms and via various methods.

In some preferred and non-limiting implementations, one or more of the client devices 101A-101N are mobile devices, such as smartphones or tablets. The one or more client devices may execute an "app" to interact with the message distribution servers 107A-107N and/or interface computing entity 109. Such apps are typically designed to execute on mobile devices, such as smartphones or tablets. For example, an app may be provided that executes on mobile device operating systems such as Apple Inc.'s iOS^{®}, Google Inc.'s Android^{®}, or Microsoft Inc.'s Windows 10 Mobile^{®}. These platforms typically provide frameworks that allow apps to communicate with one another, and with particular hardware and software components of mobile devices. For example, the mobile operating systems named above each provides frameworks for interacting with location services circuitry, wired and wireless network interfaces, user contacts, and other applications. Communication with hardware and software modules executing outside of the app is typically provided via application programming interfaces (APIs) provided by the mobile device operating system. Thus, via the app executing on the client devices 101A-101N, these client devices 101A-101N are configured for communicating with the group-based communication platform 105 via one or more websockets.

In some preferred and non-limiting implementations, the client devices 101A-101N may interact with the message distribution servers 107A-107N and/or interface computing entity 109 via a web browser. The client devices 101A-101N may also include various hardware or firmware designed to interact with the message distribution servers 107A-107N and/or interface computing entity 109. Again, via the browser of the client devices 101A-101N, the client devices 101A-101N are configured for communicating with the group-based communication platform 105 via one or more websockets.

In some implementations of an exemplary group-based communication platform 105, a message or messaging communication may be sent from a client device 101A-101N to a group-based communication platform 105. In various implementations, messages may be sent to the group-based communication platform 105 over communication network 103 directly by one of the client devices 101A-101N. The messages may be sent to the group-based communication platform 105 via an intermediary such as a message server, and/or the like. For example, a client device 101A-101N may be a desktop, a laptop, a tablet, a smartphone, and/or the like that is executing a client application (*e.g*., a group-based communication app). In one implementation, the message may include data such as a message identifier, sending user identifier, a group identifier, a group-based communication channel identifier, message contents (*e.g*., text, emojis, images, links), attachments (*e.g.,* files), message hierarchy data (*e.g.,* the message may be a reply to another message), third party metadata, and/or the like. In one implementation, the client device 101A-101N may provide the following example message, substantially in the form of a (Secure) Hypertext Transfer Protocol ("HTTP(S)") POST message including eXtensible Markup Language ("XML") formatted data, as provided below:

```
 POST /authrequest.php HTTP/1.1
 Host: www.server.com
 Content-Type: Application/XML
 Content-Length: 667
 <?XML version = "1.0" encoding = "UTF-8"?>
 <auth_request>
      <timestamp>2020-12-31 23:59:59<timestamp>
      <user_accounts _details>
            <user_account_credentials>
                  <user_name>ID_user_1</user_name>
                  <password>abc123</password>
                  //OPTIONAL <cookie>cookieID</cookie>
                  //OPTIONAL <digital_cert_link>www.mydigitalcertificate.com/
      JohnDoeDaDoeDoe@gmail.com/mycertifcate.dc</digital_cert_link>
                  //OPTIONAL <digital_certificate>_DATA_</digital_certificate>
            </user_account_credentials>
      </user_accounts_details>
      <client_details> //iOS Client with App and Webkit
                  //it should be noted that although several client details
                  //sections are provided to show example variants of client
                  //sources, further messages will include only on to save
                  //space
            <client_IP>10.0.0.123</client_IP>
            <user_agent_string>Mozilla/5.0 (iPhone; CPU iPhone OS 7_1_1 like Mac OS X)
      AppleWebKit/537.51.2 (KHTML, like Gecko) Version/7.0 Mobile/11D201
      Safari/9537.53</user_agent_string>
            <client_product_type>iPhone6,1</client_product_type>
            <client_serial_number>DNXXX1X1XXXX</client_serial_number>
            <client_UDID>3XXXXXXXXXXXXXXXXXXXXXXXXXD</client_UDID>
            <client_OS>iOS</client_OS>
            <client_OS_version>7.1.1</client_OS_version>
            <client_app_type>app with webkit</client_app_type>
            <app_installed_flag>true</app_installed_flag>
            <app_name>MSM.app</app_name>
            <app_version>1.0 </app_version>
            <app_webkit_name>Mobile Safari</client_webkit_name>
            <client_version>537.51.2</client_version>
      </client_details>
      <client_details> //iOS Client with Webbrowser
            <client_IP>10.0.0.123</client_IP>
            <user_agent_string>Mozilla/5.0 (iPhone; CPU iPhone OS 7_1_1 like Mac OS X)
      AppleWebKit/537.51.2 (KHTML, like Gecko) Version/7.0 Mobile/11D201
      Safari/9537.53</user_agent_string>
            <client_product_type>iPhone6,1</client_product_type>
            <client_serial_number>DNXXX1X1XXXX</client_serial_number>
            <client_UDID>3XXXXXXXXXXXXXXXXXXXXXXXXD</client_UDID>
            <client_OS>iOS</client_OS>
            <client_OS_version>7.1.1</client_OS_version>
            <client_app_type>web browser</client_app_type>
            <client_name>Mobile Safari</client_name>
            <client_version>9537.53</client_version>
      </client_details>
      <client_details> //Android Client with Webbrowser
            <client_IP>10.0.0.123</client_IP>
            <user_agent_string>Mozilla/5.0 (Linux; U; Android 4.0.4; en-us; Nexus S
      Build/IMM76D) AppleWebKit/534.30 (KHTML, like Gecko) Version/4.0 Mobile
      Safari/534.30</user_agent_string>
            <client_product_type>Nexus S</client_product_type>
            <client_serial_number>YXXXXXXXXZ</client_serial_number>
            <client_UDID>FXXXXXXXXX-XXXX-XXXX-XXXX-
      XXXXXXXXXXXY,X</client_UDID>
            <client_OS>Android</client_OS>
            <client_OS_version>4.0.4</client_OS_version>
            <client_app_type>web browser</client_app_type>
            <client_name>Mobile Safari</client_name>
            <client_version>534.30</client_version>
      </client_details>
      <client_details> //Mac Desktop with Webbrowser
            <client_IP>10.0.0.123</client_IP>
            <user_agent_string>Mozilla/5.0 (Macintosh; Intel Mac OS X 10_9_3)
      AppleWebKit/537.75.14 (KHTML, like Gecko) Version/7.0.3
      Safari/537.75.14</user_agent_string>
            <client_product_type>MacPro5,1</client_product_type>
            <client_serial_number>YXXXXXXXXZ</client_serial_number>
            <client_UDID>FXXXXXXXXX-XXXX-XXXX-XXXX-
     XXXXXXXXXXXXX</client_UDID>
            <client_OS>Mac OS X</client_OS>
            <client_OS_version>10.9.3</client_OS_version>
            <client_app_type>web browser</client_app_type>
            <client_name>Mobile Safari</client_name>
            <client_version>537.75.14</client_version>
      </client_details>
      <message>
            <message_identifier>ID message_ I 0</message identifier>
            <team_identifier>ID_team_1</team_identifier>
            <channel_identifier>ID_channel_1</channel_identifier>
            <contents>That is an interesting invention. I have attached a copy our patent
      policy.</contents>
            <attachments>patent_policy.pdf</attachments>
      </message>
      </auth_request>
```

In the illustrated implementation, the group-based communication platform 105 comprises a plurality of message distribution servers 107A-107N configured to receive and/or disseminate messages transmitted between and/or to a plurality of client devices 101A-101N within a channel identified by a channel identifier and/or a group identifier, and to facilitate dissemination of those messages among client devices 101A-101N that collectively form the membership of the communication channel.

In some implementations, an object identifier as defined above may be associated with the message to indicate that a particular message is embodied as an object update relating to a particular object.

In some implementations, data indicating responses may be associated with the message. For example, responses to the message by other users may include reactions (e.g., selection of an emoji associated with the message, selection of a "like" button associated with the message), clicking on a hyperlink embedded in the message, replying to the message (e.g., posting a message to the group-based communication channel interface in response to the message), downloading a file associated with the message, sharing the message from one group-based communication channel to another group-based communication channel, pinning the message, starring the message, and/or the like. In one implementation, data regarding responses to the message by other users may be included with the message, and the message may be parsed (e.g., using PHP commands) to determine the responses. In another implementation, data regarding responses to the message may be retrieved from a database. For example, data regarding responses to the message may be retrieved via a MySQL database command similar to the following:

```
      SELECT messageResponses
      FROM MSM_Message
      WHERE messageID = ID_message_10.
```

For example, data regarding responses to the message may be used to determine context for the message (e.g., a social score for the message from the perspective of some user). In another example, data regarding responses to the message may be analyzed to determine context regarding the user (e.g., the user's expertise in a topic may be determined based on the responses to the user's message regarding the topic).

In implementations, attachments may be included with the message. If there are attachments, files may be associated with the message, and these files may be separately identified as objects having a corresponding object identifier in certain implementations. In one implementation, the message may be parsed (e.g., using PHP commands) to determine file names of the attachments. For example, file contents may be analyzed to determine context for the message (e.g., a patent policy document may indicate that the message is associated with the topic "patents").

In implementations, a conversation primitive may be associated with the message. In one implementation, a conversation primitive is an element used to analyze, index, store, and/or the like messages. For example, the message may be analyzed by itself, and may form its own conversation primitive. In another example, the message may be analyzed along with other messages that make up a conversation, and the messages that make up the conversation may form a conversation primitive. In one implementation, the conversation primitive may be determined as the message, a specified number (e.g., two) of preceding messages and a specified number (e.g., two) of following messages. In another implementation, the conversation primitive may be determined based on analysis of topics discussed in the message and other messages (*e.g.,* in the channel) and/or proximity (*e.g.,* message send order proximity, message send time proximity) of these messages.

In implementations, various metadata, determined as described above, and/or the contents of the message may be used to index the message (*e.g*., using the conversation primitive) and/or to facilitate various facets of searching (*i.e.,* search queries that return results from the message distribution servers 107). Metadata associated with the message may be determined and the message may be indexed in the message distribution servers 107A-107N. In one implementation, the message may be indexed such that a company's or a group's messages are indexed separately (*e.g*., in a separate index associated with the group and/or company that is not shared with other groups and/or companies). In one implementation, messages may be indexed at a separate distributed repository (*e.g*., to facilitate data isolation for security purposes). If there are attachments associated with the message, file contents of the associated files may be used to index such files in the message distribution servers 107A-107N to facilitate searching. In one implementation, the files may be indexed such that a company's or a group's files are indexed at a separate distributed repository.

Examples of electronic information exchange among one or more client devices 101A-101N and the group-based communication platform 105 are described below with reference to FIG. 1.

As shown in FIG. 1, the group-based communication platform 105 enables individual client devices 101A-101N to exchange various messages with one another and/or to retrieve object updates disseminated from the group-based communication platform 105. To exchange such messages, individual client devices 101A-101N transmit messages (e.g., text-based messages, files, video and/or audio streams, and/or the like) to an interface (e.g., interface computing entity 109) via a communication protocol (e.g., via a websocket, a non-RTM (non-Real Time Messaging) messaging protocol, and/or the like). Those messages are ultimately provided to one or more message distribution servers 107A-107N, which indexes the messages and distributes those messages to the intended recipients (e.g., client devices 101A-101N) of the message. Object updates are similarly provided to the message distribution servers 107A-107N, however such object updates may not originate from client devices 101A-101N. Instead, object updates may be provided from one or more external systems (e.g., file management systems) or the object updates may be generated by one or more computing entities within the group-based communication platform 105. The distributed messages are provided to the recipient client devices 101A-101N via the interface computing entity 109, which maintains websocket connections with individual recipient client devices 101A-101N of the message, and maintains one or more backend connections with the various message distribution servers 107A-107N.

According to the implementation of FIG. 1, the client devices 101A-101N are configured to display the received message in contextually-relevant user interfaces available to the user of the client device 101A-101N. For example, messages transmitted from a first client device 101 as a part of a group-based communication channel are displayed in a user interface display window on client devices 101A-101N associated with other members of the group-based communication channel. As discussed herein, messages indicative of particular object updates are transmitted with object identifiers usable by the recipient client devices 101A-101N to display those messages with appropriate context, such as appropriate user display elements and/or in association with applicable objects. Moreover, the object identifiers may be usable by various ones of the message distribution servers 107A-107N to filter messages destined for particular client devices 101A-101N based on object subscriptions as discussed herein.

To distribute messages to individual client devices 101A-101N, the messages are transmitted from the message distribution servers 107A-107N to the interface computing entity 109, which directs all messages destined for respective ones of the client devices 101A-101N, and transmits all of those messages to the client devices 101A-101N over appropriate connections (e.g., websocket connections).

### Example Apparatuses Utilized with Various Implementations

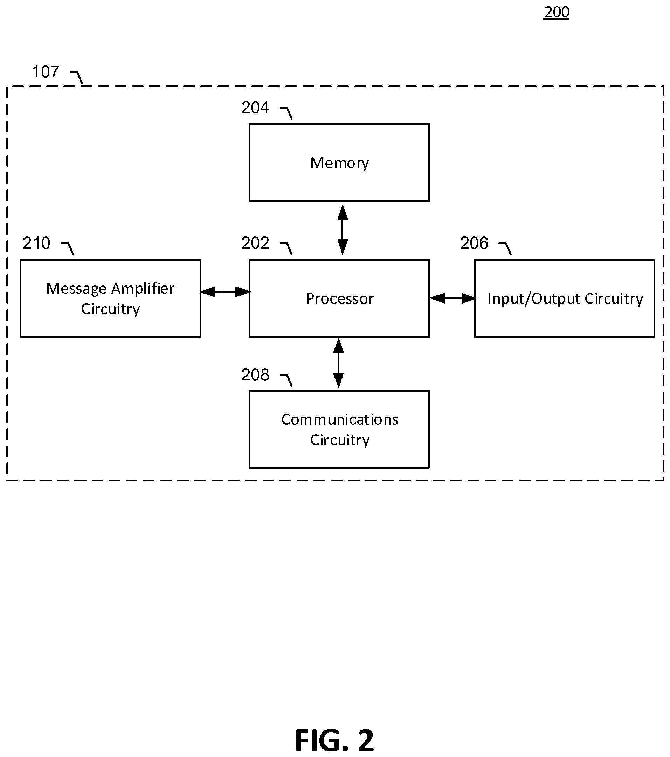

Each message distribution server 107 may be embodied by one or more computing systems, such as apparatus 200 shown in FIG. 2. The apparatus 200 may include processor 202, memory 204, input/output circuitry 206, communications circuitry 208, and message amplifier circuitry 210. The apparatus 200 may be configured to execute the operations described herein with respect to FIGS. 1-6. Although these components 202-210 are described with respect to functional limitations, it should be understood that the particular implementations necessarily include the use of particular hardware. It should also be understood that certain of these components 202-210 may include similar or common hardware. For example, two sets of circuitries may both leverage use of the same processor, network interface, storage medium, or the like to perform their associated functions, such that duplicate hardware is not required for each set of circuitries.

In some implementations, the processor 202 (and/or co-processor or any other processing circuitry assisting or otherwise associated with the processor) may be in communication with the memory 204 via a bus for passing information among components of the apparatus. The memory 204 is non-transitory and may include, for example, one or more volatile and/or non-volatile memories. In other words, for example, the memory 204 may be an electronic storage device (*e.g.,* a computer-readable storage medium). The memory 204 may be configured to store information, data, content, applications, instructions, or the like for enabling the apparatus to carry out various functions in accordance with example implementations of the present invention.

The processor 202 may be embodied in a number of different ways and may, for example, include one or more processing devices configured to perform independently. In some preferred and non-limiting implementations, the processor 202 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

In some preferred and non-limiting implementations, the processor 202 may be configured to execute instructions stored in the memory 204 or otherwise accessible to the processor 202. In some preferred and non-limiting implementations, the processor 202 may be configured to execute hard-coded functionalities. As such, whether configured by hardware or software methods, or by a combination thereof, the processor 202 may represent an entity (*e.g*., physically embodied in circuitry) capable of performing operations according to an implementation of the present invention while configured accordingly. Alternatively, as another example, when the processor 202 is embodied as an executor of software instructions, the instructions may specifically configure the processor 202 to perform the algorithms and/or operations described herein when the instructions are executed.

As just one example, the processor 202 may be configured to maintain one or more communication channels connecting a plurality of client devices 101A-101N to enable message sharing/dissemination therebetween. The processor 202 ensures that messages intended for exchange between the client devices 101A-101N within the particular communication channel are properly disseminated to those client devices 101A-101N for display within respective display windows provided via the client devices 101A-101N.

Moreover, the processor 202 may be configured to synchronize messages exchanged on a particular communication channel with a database for storage and/or indexing of messages therein. In certain implementations, the processor 202 may provide stored and/or indexed messages to the interface computing entity 109 for dissemination to client devices 101A-101N.

In some implementations, the apparatus 200 may include input/output circuitry 206 that may, in turn, be in communication with processor 202 to provide output to the user and, in some implementations, to receive an indication of a user input. The input/output circuitry 206 may comprise a user interface and may include a display, and may comprise a web user interface, a mobile application, a client device, a kiosk, or the like. In some implementations, the input/output circuitry 206 may also include a keyboard, a mouse, a joystick, a touch screen, touch areas, soft keys, a microphone, a speaker, or other input/output mechanisms. The processor and/or user interface circuitry comprising the processor may be configured to control one or more functions of one or more user interface elements through computer program instructions (e.g., software and/or firmware) stored on a memory accessible to the processor (e.g., memory 204, and/or the like).

The communications circuitry 208 may be any means such as a device or circuitry embodied in either hardware or a combination of hardware and software that is configured to receive and/or transmit data from/to a network and/or any other device, circuitry, or module in communication with the apparatus 200. In this regard, the communications circuitry 208 may include, for example, a network interface for enabling communications with a wired or wireless communication network. For example, the communications circuitry 208 may include one or more network interface cards, antennae, buses, switches, routers, modems, and supporting hardware and/or software, or any other device suitable for enabling communications via a network. Additionally or alternatively, the communications circuitry 208 may include the circuitry for interacting with the antenna/antennae to cause transmission of signals via the antenna/antennae or to handle receipt of signals received via the antenna/antennae.

Message amplifier circuitry 210 includes hardware configured to copy and amplify electronic messages and associated metadata received from one or more client devices 101A-101N to other client devices 101A-101N based on database shard(s). The message amplifier circuitry 210 may utilize processing circuitry, such as the processor 202, to perform these actions. However, it should also be appreciated that, in some implementations, the message amplifier circuitry 210 may include a separate processor, specially configured Field Programmable Gate Array (FPGA), or Application Specific Integrated Circuit (ASIC) for performing the functions described herein. The message amplifier circuitry 210 may be implemented using hardware components of the apparatus configured by either hardware or software for implementing these planned functions.

It is also noted that all or some of the information discussed herein can be based on data that is received, generated and/or maintained by one or more components of apparatus 200. In some implementations, one or more external systems (such as a remote cloud computing and/or data storage system) may also be leveraged to provide at least some of the functionality discussed herein.

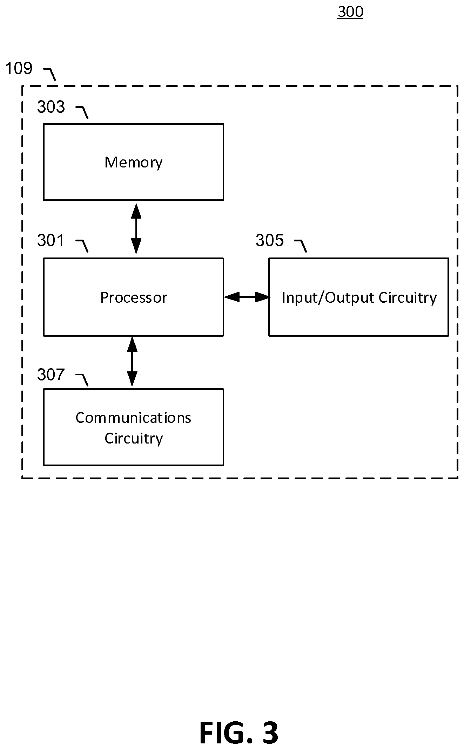

In the illustrated implementation of FIG. 3, the interface computing entity 109 is embodied by one or more computing systems encompassing apparatus 300. The illustrated apparatus 300 includes processor 301, memory 303, input/output circuitry 305, and communications circuitry 307. The apparatus 300 may be configured to execute the operations described herein with respect to FIGS. 1-6. Although these components 301-307 are described with respect to functional limitations, it should be understood that the particular implementations necessarily include the use of particular hardware. It should also be understood that certain of these components 301-307 may include similar or common hardware. For example, two sets of circuitries may both leverage use of the same processor, network interface, storage medium, or the like to perform their associated functions, such that duplicate hardware is not required for each set of circuitries.

In some implementations, the processor 301 (and/or co-processor or any other processing circuitry assisting or otherwise associated with the processor) may be in communication with the memory 303 via a bus for passing information among components of the apparatus. The memory 303 is non-transitory and may include, for example, one or more volatile and/or non-volatile memories. In other words, for example, the memory 303 may be an electronic storage device (*e.g.,* a computer-readable storage medium). The memory 303 may be configured to store information, data, content, applications, instructions, or the like for enabling the apparatus 300 to carry out various functions in accordance with example implementations of the present invention. For example, the memory 303 may be configured to cache messages exchanged on one or more group-based communication channels, such that the processor 301 may provide various messages to client devices (*e.g*., on an as needed or as requested basis).

The processor 301 may be embodied in a number of different ways and may, for example, include one or more processing devices configured to perform independently. In some preferred and non-limiting implementations, the processor 301 may include one or more processors configured in tandem via a bus to enable independent execution of instructions, pipelining, and/or multithreading.

In some preferred and non-limiting implementations, the processor 301 may be configured to execute instructions stored in the memory 303 or otherwise accessible to the processor 301. In some preferred and non-limiting implementations, the processor 301 may be configured to execute hard-coded functionalities. As such, whether configured by hardware or software methods, or by a combination thereof, the processor 301 may represent an entity (*e.g*., physically embodied in circuitry) capable of performing operations according to an implementation of the present invention while configured accordingly. Alternatively, as another example, when the processor 301 is embodied as an executor of software instructions, the instructions may specifically configure the processor 301 to perform the algorithms and/or operations described herein when the instructions are executed.

In some implementations, the apparatus 300 may include input/output circuitry 305 that may, in turn, be in communication with processor 301 to provide output to the user and, in some implementations, to receive an indication of a user input. The input/output circuitry 305 may comprise a user interface and may include a display, and may comprise a web user interface, a mobile application, a client device, a kiosk, or the like. In some implementations, the input/output circuitry 305 may also include a keyboard, a mouse, a joystick, a touch screen, touch areas, soft keys, a microphone, a speaker, or other input/output mechanisms.

The communications circuitry 307 may be any means such as a device or circuitry embodied in either hardware or a combination of hardware and software that is configured to receive and/or transmit data from/to a network and/or any other device, circuitry, or module in communication with the apparatus 300. In this regard, the communications circuitry 307 may include, for example, a network interface for enabling communications with a wired or wireless communication network. For example, the communications circuitry 307 may include one or more network interface cards, antennae, buses, switches, routers, modems, and supporting hardware and/or software, or any other device suitable for enabling communications via a network. Additionally or alternatively, the communications circuitry 307 may include the circuitry for interacting with the antenna/antennae to cause transmission of signals via the antenna/antennae or to handle receipt of signals received via the antenna/antennae.

It is also noted that all or some of the information discussed herein can be based on data that is received, generated and/or maintained by one or more components of apparatus 300. In some implementations, one or more external systems (such as a remote cloud computing and/or data storage system) may also be leveraged to provide at least some of the functionality discussed herein.

Moreover, although the interface computing entity 109 is shown within the bounds of the group-based communication platform 105, it should be understood that the interface computing entity 109 may be embodied as an edge-based computing device in communication with aspects of the group-based communication platform 105 via a communication network 103. Such implementations may comprise a plurality of interface computing entities 109 that are geographically distributed, and such interface computing entities 109 may be configured for communicating with client devices 101A-101N within a geographic range proximate a respective interface computing entity 109.

The term "circuitry" should be understood broadly to include hardware and, in some implementations, software for configuring the hardware. With respect to components of each apparatus 200, 300, the term "circuitry" as used herein should therefore be understood to include particular hardware configured to perform the functions associated with the particular circuitry as described herein. For example, in some implementations, "circuitry" may include processing circuitry, storage media, network interfaces, input/output devices, and the like. In some implementations, other elements of the apparatus 200 may provide or supplement the functionality of particular circuitry. For example, the processor 202 may provide processing functionality, the memory 204 may provide storage functionality, the communications circuitry 208 may provide network interface functionality, and the like. Similarly, other elements of the apparatus 300 may provide or supplement the functionality of particular circuitry. For example, the processor 301 may provide processing functionality, the memory 303 may provide storage functionality, the communications circuitry 307 may provide network interface functionality, and the like.

As will be appreciated, any such computer program instructions and/or other type of code may be loaded onto a computer, processor or other programmable apparatus's circuitry to produce a machine, such that the computer, processor or other programmable circuitry that execute the code on the machine creates the means for implementing various functions, including those described herein.

As described above and as will be appreciated based on this disclosure, implementations of the present invention may be configured as methods, mobile devices, backend network devices, and the like. Accordingly, implementations may comprise various means including entirely of hardware or any combination of software and hardware. Furthermore, implementations may take the form of a computer program product on at least one non-transitory computer-readable storage medium having computer-readable program instructions (*e.g*., computer software) embodied in the storage medium. Any suitable computer-readable storage medium may be utilized including non-transitory hard disks, CD-ROMs, flash memory, optical storage devices, or magnetic storage devices.

Moreover, although not shown, various implementations of a group-based communication platform may comprise one or more databases configured for storing and/or indexing messages exchanged within various group-based communication channels.

### Example Data Flows

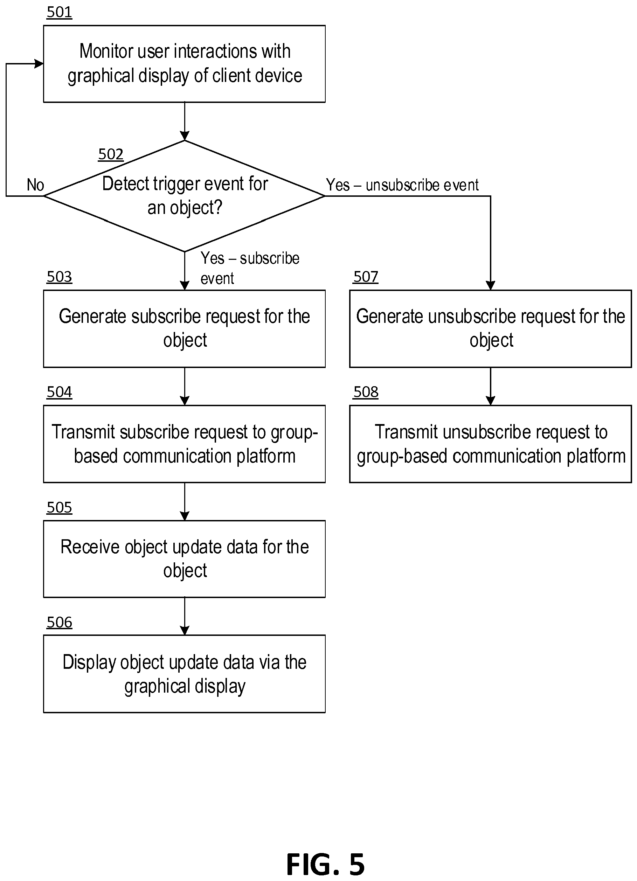

FIGS. 5-6 are flowcharts illustrating the functionality of, or methods carried by, the individual client devices 101A-101N and the group-based communication platform 105, to provide object updates to the client devices using the present dynamic subscription management system. As mentioned herein, various implementations enable the group-based communication platform 105 to minimize the amount of network traffic transmitted to the client devices 101A-101N through the use of subscription-based data transmission schemes for object updates. These subscription-based data transmission schemes may operate based on user activity with a client device 101A-101N, such that the client device 101A-101N requests to subscribe to a particular object's updates upon determining that the particular object is currently being viewed by the user or is otherwise considered of current interest to the user. The client devices 101A-101N may utilize one or more trigger events to determine when to generate a subscribe request or an unsubscribe request.

### Client Device Operation

According to various implementations, the individual client devices 101A-101N determine the level of network traffic transmitted from the group-based communication platform 105 to those client devices 101A-101N for providing object updates thereto. The client devices 101A-101N rely on the detection of certain defined trigger events for determining which object updates should be transmitted from the group-based communication platform 105 to the individual client devices 101A-101N, and those client devices 101A-101N provide data to the group-based communication platform 105 in the form of subscription modification requests embodied as subscribe requests and unsubscribe requests to reflect the determined need of the client devices 101A-101N for object updates. The individual client devices 101A-101N are configured to constantly monitor usage by a user to determine which object update subscriptions may be terminated, and which object update subscriptions need to be initiated based on the user's interaction with a graphical interface of the client device 101A-101N.

FIG. 5 illustrates various steps performed by an example client device 101 for maintaining up-to-date object update subscriptions in real-time in connection with a group-based communication platform 105. As shown at Block 501, the client device 101 monitors user interactions with the client device 101 to detect whether a trigger event has occurred with respect to one or more objects, as indicated at Block 502.

The trigger events may be any of a variety of events indicating that the user of the client device 101 has an interest in the particular object. With reference briefly to the example interface schematic of FIG. 4, a trigger event may be scrolling a particular pane within the interface such that an indication of an object moves across a boundary of a visible portion of a user interface from a hidden portion 403 (e.g., outside of the field of view of the interface) to a visible portion 402 (e.g., within the field of view of the interface, so that the object itself becomes visible) to initiate a subscribe request, or vice-versa (movement from a visible portion 402 to a hidden portion 403) to initiate an unsubscribe request. As another example, a trigger event may be moving between one display to another (e.g., causing the client device to initiate a subscribe request for one or more objects within the newly selected display and causing the client device to initiate an unsubscribe request for one or more objects within the unselected display). Other trigger events, such as moving an object across a field of view of the user interface, selecting a channel having one or more objects therein, selecting a consolidated listing of objects, receiving a specific data type at the client device (e.g., via a websocket connection, a RTM connection, and/or the like) and/or the like, are further examples of trigger events that may be utilized for initiating a subscription modification request. Such triggers to make an object visible will generate, as seen before, a subscription modification request comprising data identifying changes to selected or identified objects displayed within the field of view of the graphical user interface of the client device 101. When the trigger is a move of an object, the data identifying changes may be data identifying objects moved across a graphical user interface field of view border of the client device.

With reference again to FIG. 5, upon detecting a trigger event for initiating a subscribe request, the client device 101 generates such a subscribe request as indicated at Block 503. Because these subscribe requests (as well as the unsubscribe requests discussed below) are generated upon detection of the occurrence of a trigger event, the client device 101 is configured to generate subscription modification requests dynamically, such that the message distribution servers 107A-107N maintain up-to-date subscription data comprising e.g. a subscription listing, or subscription list, for the client device 101. Through the dynamic generation of subscription modification requests, the client device 101 ensures that only object updates relevant to particular objects of current interest to the client device 101 (and the client device's user) are transmitted to the client device 101. This minimizes the amount of object update data transmitted between the group-based communication platform 105 and the client device 101.

In certain implementations, the subscribe request comprises a request identifier (which may be later utilized to match a response with the initial request), a subscribe type (e.g., which may indicate how the request/response are routed between the client device 101 and the message distribution servers 107A-107N; and/or which may indicate what type of object the subscribe request relates to), and a subscription map identifying the objects for which a subscription is requested and/or other characteristics of those objects (e.g., a version identifier/number). The subscription map may be provided in an array according to various implementations. In certain implementations, subscription requests are additive at the message distribution servers 107A-107N, and accordingly the subscription map may only include a listing of new objects for which a subscription is requested. The listing included within the subscription map is added to an existing listing at the message distribution servers 107A-107N as discussed herein. However, it should be understood that in certain implementations, the subscription map may be exclusive, such that the subscription map overwrites an existing listing of objects subscribed to by the client device 101 upon receipt of the subscription request at the message distribution servers 107A-107N.

As indicated at Block 504, the constructed subscription request is transmitted to the group-based communication platform 105, where it is directed to the message distribution servers 107A-107N for storage and use. Although not shown in FIG. 5, the message distribution servers 107A-107N may transmit a separate response indicating whether the subscribe request was successful/unsuccessful, which may be received by the client device 101 prior to receiving any object updates. In such implementations, the client device 101 may generate a new subscribe request in the event the response indicates the subscribe request was unsuccessful.

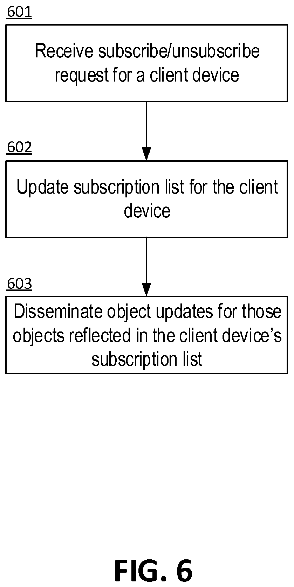

Based at least on the received subscription modification requests, the message distributions servers 107A-107N dynamically maintains subscription data for each client device 101A-101N, as detailed in relation to FIG. 6. Once the subscribe request has successfully been accepted by the message distribution servers 107A-107N, the message distribution servers 107A-107N provide object updates to the client device 101 upon determining that object data stored within a local data storage area of the client device 101 is not current (e.g., upon determining that a version identifier of object data stored at the client device 101 and reflected in the subscription modification request does not match a current version identifier stored at the message distribution servers 107A-107N). To do so, the message distribution servers 107A-107N determine whether a particular client device like client device 101 comprises current object data corresponding to each subscribed object reflected in the subscription data for the particular client device. Upon determining that client device 101 does not comprise current object data corresponding to one or more subscribed objects reflected in the subscription data, the message distribution servers 107A-107N will transmit updates of the subscribed objects reflected in the subscription data over a communication network. The transmission may be real-time or through scheduled transmissions. The client device 101 receives and stores those object updates in the local data storage area as indicated at Block 505, and provides appropriate updates to the visual indicators of those objects displayed via the graphical display of the client device 101, as indicated at Block 506. When the subscription data relates to visible objects (e.g. when the triggers are related to moving an object or making it visible), the updates transmitted by the message distribution servers 107A-107N will be related to the visible objects reflected in the subscription data.

Referring back to Block 502, upon detecting an unsubscribe trigger event for an object (e.g., moving an object into a not-visible portion of a display), the client device 101 generates an unsubscribe request as indicated at Block 507. In certain implementations, the unsubscribe request comprises a request identifier (which may be later utilized to match a response with the initial request), an unsubscribe type (e.g., which may indicate how the request/response are routed between the client device 101 and the message distribution servers 107A-107N; and/or which may indicate what type of object the unsubscribe request relates to), and a listing of objects for which the unsubscribe request relates. The listing of objects may be provided in an array, in certain implementations. Once the unsubscribe request is assembled at the client device 101, the client device 101 transmits the unsubscribe request to the group-based communication platform 105 as indicated at Block 508, where it is ingested and provided to the message distribution servers 107A-107N.

In certain implementations, unsubscribe requests are additive at the message distribution servers 107A-107N, and accordingly the listing of objects only includes a listing of new objects for which an unsubscribe request is provided. In certain implementations, a default operation of the message distribution servers 107A-107N is an unsubscribed state for particular objects, and accordingly the unsubscribe request may cause the message distribution servers 107A-107N to remove the listed objects from a subscription list maintained at the message distribution servers 107A-107N for a particular client device 101.

In certain implementations, disconnecting and/or reconnecting the client device 101 from the group-based communication platform 105 operates to unsubscribe the client device 101 from all subscriptions included within the client device's subscription list (e.g., with or without a discrete unsubscribe request transmitted from the client device 101). For example, upon reconnection of the client device 101 with the group-based communication platform 105 after a disconnection event, the client device 101 may generate and transmit an unsubscribe request for all of the previously established subscriptions existing prior to the disconnection event. As another example, upon reconnection of the client device 101 with the group-based communication platform 105, the message distribution servers 107A-107N may automatically unsubscribe the client device 101 from all of the previously established subscriptions existing prior to the disconnection event. This may operate to clean-up any extraneous subscriptions remaining within the client device's subscription list, such that only relevant subscriptions are renewed when the client device 101 reconnects with the group-based communication platform 105. Upon reconnection, the client device 101 generates subscription requests only for those objects for which a trigger event is detected (e.g., detecting that an object indicator is within a field-of-view of a display, and/or the like), as indicated according to the methodology described in relation to FIG. 5.

### Message Distribution Server Operation

FIG. 6 provides an example set of steps performed by the message distribution servers 107A-107N with respect to subscription modification requests according to one implementation. As seen before, the message distribution servers maintain current object data for a plurality of objects as well as subscription data for each of one or more client devices 101A-101N. As indicated at Block 601, the message distribution servers 107A-107N receive subscription modification requests from one or more client devices 101A-101N as described above. These requests may be received together with metadata indicative of the identity of a sending client device 101, such that the message distribution servers 107A-107N may maintain, i.e. appropriately update, subscription data for the sending client devices 101A-101N. Moreover, those subscription modification requests may comprise a request identifier (that may be used to correlate a response generated at the message distribution servers 107A-107N with the initial request generated at the client device 101), a request type (e.g., which may indicate, *inter alia,* whether the request is a subscribe or an unsubscribe request, and what type of object the request is directed to), and may identify at least one object, e.g. through an array comprising a listing of objects for which the request relates. As a specific example, the request type may indicate that the request is a subscribe request for a file update, and the included array may comprise data identifying the particular file(s) for which the request relates. As yet another example, the request type may indicate that the request is an unsubscribe request for user updates, and the included array may comprise data identifying the particular user(s) for which the request relates. Because object updates are transmitted from the distribution servers 107A-107N together with one or more identifiers identifying the type of object to which the update relates and the identity of the object to which the update relates, the data contained within the request may be sufficient for the message distribution servers 107A-107N to apply a filter to object updates transmitted to the client devices 101A-101N.

As indicated at Block 602 of FIG. 6, the message distribution servers 107A-107N update subscription data for the client device 101 based on the received subscription modification requests. When the subscription modification requests each comprise data identifying changes to identified objects displayed within the graphical user interface field of view of client device 101, e.g., to make the identified objects visible, the subscription data will, as mentioned before, identify visible objects of the plurality of objects within the graphical user interface field of view of client device 101. Additionally, the subscription data maintained by the message distribution servers 107A-107N may be in the form of a subscription list for each of one or more client devices 101A-101N, wherein the subscription list for a particular client device comprises object identifiers corresponding to subscribed objects (of the plurality of objects) for that particular client device. To perform the update of block 602, the message distribution servers 107A-107N will compare the subscription modification request received from the client device 101 with the subscription list stored for client device 101. If it is determined that the subscription modification request identifies a change in the subscription list for client device 101, the message distribution servers 107A-107N will dynamically update the subscription list to generate an updated subscription list for client device 101 based in part on the received subscription modification request. When the received subscription request identifies at least one object and a subscription modification request type, the update may be based on such parameters. As discussed above, the subscription lists stored at the message distribution servers 107A-107N for particular client devices 101A-101N may be additive, such that updating a subscription list comprises adding non-duplicative objects for a client device's subscriptions to the client device-specific subscription list.

In certain implementations, the message distribution servers 107A-107N may be configured to compare subscribe requests and unsubscribe requests received from a single client device 101 prior to updating the subscription list, such that combinations of subscribe requests and unsubscribe requests that would result in no net change to the subscription list may be cancelled out prior to updating the subscription list. As a specific example, if an existing subscription list indicates that the client device 101 is subscribed to Object A, the message distribution servers 107A-107N then receive both an unsubscribe request and a subscribe request relating to Object A, which would collectively result in a sequential unsubscription followed by a resubscription to Object A updates, the message distribution servers 107A-107N may cancel these requests out, because the net result of the unsubscribe and subscribe events is to maintain the *status quo* of the subscription with respect to Object A.

Moreover, in certain implementations the message distribution servers 107A-107N may implement a maximum number of simultaneous subscriptions for a particular client device 101A-101N. Thus, when receiving at least substantially simultaneous subscribe and unsubscribe requests, the message distribution servers 107A-107N may be configured to update the subscription list based on the unsubscribe request prior to adding new subscriptions based on the subscribe request. Moreover, in such implementations, the message distribution servers 107A-107N may be configured to reject subscribe requests that would result in the total number of subscriptions exceeding the maximum permissible number of subscriptions. In other implementations, the message distribution servers 107A-107N may not reject subscribe requests that would cause the total number of subscriptions to exceed the maximum number of subscriptions, but may instead automatically unsubscribe the client device 101 from the oldest subscriptions within the subscription list such that the total number of subscriptions, including the newly requested subscriptions within the subscribe request, remains at or below the maximum number of subscriptions for the client device 101.

Based on the updated subscription lists, the message distribution servers 107A-107N disseminate object updates to client devices 101A-101N as indicated at Block 603. In other words, the message distribution servers 107A-107N will implement the updated subscription list at Block 602 to provide current object data for the subscribed objects of the plurality of objects identified within the updated subscription list to the client devices. These object updates may be provided through the interface computing entity 109, which may be configured pass those object updates along to appropriate client devices 101A-101N. In certain implementations, the message distribution servers 107A-107N may be further configured to ensure that all appropriate object updates are provided to a client device 101 to catch-up on object updates, for example, after reconnecting the client device 101 with the group-based communication platform 105 to recover from a disconnection.

Moreover, although not shown in FIG. 6, the message distribution servers 107A-107N may be configured to transmit messages to the client devices 101 indicating whether a subscription modification request was successful or unsuccessful. These responsive messages (which may be correlated with an original request based on the request identifier) may be transmitted separately from any object update data in certain implementations. In other implementations, the responsive messages may be added to (e.g., concatenated to) an object update message transmitted to the client device 101 to provide an indication to the client device 101 that the subscription modification request was successful.

In certain implementations, the subscription modification requests generated at a client device 101 are specific to a particular connection mechanism utilized by the client device 101 to receive data from the group-based communication platform 105. For example, in implementations in which the client device 101 receives data via one or more websocket connections with the group-based communication platform 105, subscription modification requests are generated at the client device 101 for each of the one or more websocket connections independently. Thus, in implementations in which the client device 101 and the group-based communication platform 105 collectively maintain a plurality of websocket connections therebetween (e.g., supporting separate displays, channels, and/or the like), each websocket connection may have a corresponding subscription list maintained based on subscription modification requests transmitted from the client device 101 and processed by the message distribution servers 107A-107N.

Moreover, in certain implementations the message distribution servers 107A-107N are configured to determine whether the destination client devices 101A-101N have already received one more messages, or whether the messages must still be transmitted to those destination client devices 101A-101N. Such functionality may be particularly relevant during reconnection between the client devices 101A-101N and the group-based communication platform 105 after a communication disconnect. In such instances, the message distribution servers 107A-107N may be configured to determine what messages (or other data) must be transmitted to the client devices 101A-101N such that the client devices 101A-101N have data indicative of up-to-date messages stored thereon. For example, the message distribution servers 107A-107N may compare data indicative of a last message provided to a particular client device 107A-107N for a particular object (e.g., data indicative of a version identifier of an object provided to the client device 101A-101N) relative to data indicative of all messages generated for a particular object (e.g., data indicative of a current version identifier for the particular object). The message distribution servers 107A-107N may then determine which messages (if any) should be provided to the client devices 101A-101N such that those client devices 101A-101N are fully caught-up on object updates for subscribed objects, such data indicative of those subscribed objects are fully current as stored on the client device 101A-101N.

### Interface Computing Entity Operation

Generally, the interface computing entity 109 is configured to relay messages, object updates, and/or the like between the client devices 101A-101N and the message distribution servers 107A-107N. As messages are received from the message distribution servers 107A-107N to be disseminated to client devices 101A-101N, the interface computing entity 109 is configured to identify appropriate websocket connections with the destination client devices 101A-101N, and to pass those messages along to the appropriate client devices 101A-101N. In certain implementations, messages (object updates) received at the interface computing entity 109 with assigned destination client devices 101A-101N have already been filtered according to the subscription methodologies discussed herein, and accordingly the interface computing entity 109 need not determine whether a particular client device 101 has subscribed to object updates received at the interface computing entity 109. Moreover, the interface computing entity 109 need not determine whether a particular client device 101 has already received a message destined for the particular client device 101. In such implementations, the interface computing entity 109 operates merely to pass messages between the message distribution servers 107A-107N and the client devices 101A-101N.

As discussed herein, the interface computing entity 109 may be configured to maintain one or more websocket connections (or other data transmission connections) with each of the client devices 101A-101N. Similarly, the interface computing entity 109 is configured to maintain one or more backend connections with the message distribution servers 107A-107N, thereby enabling object updates and/or other messages to be passed between the client devices 101A-101N and the message distribution servers 107A-107N.

Moreover, it should be understood that in certain implementations, one or more functionalities discussed herein with reference to the message distribution servers 107A-107N may be performed by the interface computing entity 109. For example, an interface computing entity 109 of certain implementations may maintain subscription data for one or more client devices 101A-101N, and/or the interface computing entity 109 may determine whether object-related data stored at a client device 101A-101N for a subscribed object is fully current. Thus, it should be understood that the identity of the computing entity discussed herein as performing various functions of the group-based communication platform 105 need not be limiting in certain configurations.

## Claims

1. A computer-implemented method for dynamically maintaining object updates stored on a client device, the method comprising:
storing, in a data storage associated with the client device, object data associated with one or more objects;
monitoring (501) user interaction with the one or more objects;
detecting (502) one or more trigger events indicating a change in user interaction with one object of the one or more of objects;
generating (503, 507) a subscription modification request as a subscribe or an unsubscribe request, wherein the subscription modification request is generated for the object based at least in part on the one or more trigger events, a trigger event identifying a change to one or more objects within a graphical user interface of the client device, wherein the trigger event comprises one of
moving the one or more objects between a visible portion and hidden portion of the graphical user interface,
moving one or more objects across a boundary of a visible portion of a graphical user interface or
moving between one display to another;
dynamically maintaining subscription data for the client device at a remote computing platform based on the subscription modification request; where the subscription data identifies subscribed objects of the one or more objects for the client device;
transmitting (504) the subscription modification request to the remote computing platform to request a modification of object data transmitted to the client device relating to the object; and
transmitting (504) object data updates of subscribed objects from the remote computing platform to the client device.

2. The computer-implemented method of claim 1, wherein the one or more trigger events comprise moving the object between a visible portion and hidden portion of a graphical user interface.

3. The computer-implemented method of any of claims 1-2, wherein the one or more trigger events comprise moving the object across a boundary of a visible portion of a graphical user interface.

4. The computer-implemented method of any of claims 1-3, wherein, upon detecting movement of the object from a hidden portion to a visible portion of a graphical user interface, the subscription modification request comprises the subscribe request for the object to initiate a subscription relating to the object.

5. The computer-implemented method of any of claims 1-3, wherein, upon detecting movement of the object from a visible portion to a hidden portion of a graphical user interface, the subscription modification request comprises an unsubscribe request for the object to terminate a subscription relating to the object.

6. The computer-implemented method of any of claims 1-5, wherein the subscription modification request comprises a type indicating whether the subscription modification request is a subscribe request or an unsubscribe request, and wherein the type is determined based at least in part on whether the object is visible within a portion of a graphical user interface.

7. The computer-implemented method of any of claims 1-6, wherein the subscription modification request includes at least one of a request identifier, a subscribe type associated with message routing or object type, or information associated with the object.

8. The computer-implemented method of any of claims 1-7, wherein the subscription modification request includes a version identifier indicating a version of the object data.

9. The computer-implemented method of any of claims 1-8, further comprising receiving an update to the object data responsive to transmitting the subscription modification request to the remote computing platform.

10. The computer-implemented method of any of claims 1-9, wherein the one or more trigger events are detected based at least in part on connectivity between the client device and the remote computing platform.

11. A client device (101A, 101N) for dynamically maintaining object updates stored on the client device, the client device comprising:
one or more memory storage areas for maintaining a local data store of object data for a plurality of objects;
one or more processors collectively configured to carry out the method of any of claims 1-10.

12. One or more computer-readable media storing instructions that when executed by one or more processors of a client device, cause the client to carry out the method of any of claims 1-10.

## Patentansprüche

1. Computerimplementiertes Verfahren zum dynamischen Verwalten von Objektaktualisierungen, die auf einem Client-Gerät gespeichert sind, wobei das Verfahren Folgendes umfasst:
Speichern, in einer Datenspeicherung, die mit dem Client-Gerät assoziiert ist, von Objektdaten, die mit einem oder mehreren Objekten assoziiert sind;
Überwachen (501) einer Benutzerinteraktion mit dem einen oder den mehreren Objekten;
Detektieren (502) eines oder mehrerer Triggerereignisse, die eine Änderung der Benutzerinteraktion mit einem Objekt des einen oder der mehreren Objekte angeben;
Erzeugen (503, 507) einer Subskriptionsmodifikationsanforderung als eine Subskriptionsanforderung oder eine Abmeldeanforderung, wobei die Subskriptionsmodifikationsanforderung für das Objekt zumindest teilweise basierend auf dem einen oder den mehreren Triggerereignissen erzeugt wird, wobei ein Triggerereignis eine Änderung an einem oder mehreren Objekten innerhalb einer grafischen Benutzeroberfläche des Client-Geräts identifiziert, wobei das Triggerereignis eines von Folgenden umfasst:
Bewegen des einen oder der mehreren Objekte zwischen einem sichtbaren Teil und einem verborgenen Teil der grafischen Benutzeroberfläche,
Bewegen eines oder mehrerer Objekte über eine Grenze eines sichtbaren Teils einer grafischen Benutzeroberfläche oder
Wechseln von einer Anzeige zu einer anderen;
Dynamisches Aufrechterhalten von Subskriptionsdaten für das Client-Gerät auf einer entfernten Rechenplattform basierend auf der Subskriptionsmodifikationsanforderung;
wobei die Subskriptionsdaten subskribierte Objekte des einen oder der mehreren Objekte für das Client-Gerät identifizieren;
Übertragen (504) der Subskriptionsmodifikationsanforderung an die entfernte Rechenplattform, um eine Modifikation von Objektdaten anzufordern, die an das Client-Gerät in Bezug auf das Objekt übertragen werden; und
Übertragen (504) von Objektdatenaktualisierungen von abonnierten Objekten von der entfernten Rechenplattform an das Client-Gerät.

2. Computerimplementiertes Verfahren nach Anspruch 1, wobei das eine oder die mehreren Triggerereignisse das Bewegen des Objekts zwischen einem sichtbaren Teil und einem verborgenen Teil einer grafischen Benutzeroberfläche umfassen.

3. Computerimplementiertes Verfahren nach einem der Ansprüche 1-2, wobei das eine oder die mehreren Triggerereignisse das Bewegen des Objekts über eine Grenze eines sichtbaren Teils einer grafischen Benutzeroberfläche umfassen.

4. Computerimplementiertes Verfahren nach einem der Ansprüche 1-3, wobei die Subskriptionsmodifikationsanforderung nach dem Detektieren einer Bewegung des Objekts von einem verborgenen Teil zu einem sichtbaren Teil einer grafischen Benutzeroberfläche die Subskriptionsanforderung für das Objekt zum Initiieren einer Subskription in Bezug auf das Objekt umfasst.

5. Computerimplementiertes Verfahren nach einem der Ansprüche 1-3, wobei die Subskriptionsmodifikationsanforderung nach dem Detektieren einer Bewegung des Objekts von einem sichtbaren Teil zu einem verborgenen Teil einer grafischen Benutzeroberfläche eine Abmeldeanforderung für das Objekt zum Beenden einer Subskription bezüglich des Objekts umfasst.

6. Computerimplementiertes Verfahren nach einem der Ansprüche 1-5, wobei die Subskriptionsmodifikationsanforderung einen Typ umfasst, der angibt, ob die Subskriptionsmodifikationsanforderung eine Subskriptionsanforderung oder eine Abmeldeanforderung ist, und wobei der Typ zumindest teilweise basierend darauf bestimmt wird, ob das Objekt innerhalb eines Abschnitts einer grafischen Benutzeroberfläche sichtbar ist.

7. Computerimplementiertes Verfahren nach einem der Ansprüche 1-6, wobei die Subskriptionsmodifikationsanforderung eine Anforderungsidentifizierung und/oder einen Subskriptionstyp, der mit Nachrichtenrouting oder Objekttyp assoziiert ist, und/oder Informationen, die mit dem Objekt assoziiert sind, beinhaltet.

8. Computerimplementiertes Verfahren nach einem der Ansprüche 1-7, wobei die Subskriptionsmodifikationsanforderung eine Versionskennung beinhaltet, die eine Version der Objektdaten angibt.

9. Computerimplementiertes Verfahren nach einem der Ansprüche 1-8, ferner umfassend das Empfangen einer Aktualisierung der Objektdaten als Reaktion auf das Übertragen der Subskriptionsmodifikationsanforderung an die entfernte Rechenplattform.

10. Computerimplementiertes Verfahren nach einem der Ansprüche 1-9, wobei das eine oder die mehreren Triggerereignisse zumindest teilweise basierend auf einer Konnektivität zwischen der Client-Vorrichtung und der entfernten Rechenplattform detektiert werden.

11. Client-Gerät (101A, 101N) zum dynamischen Verwalten von Objektaktualisierungen, die auf dem Client-Gerät gespeichert sind, wobei das Client-Gerät Folgendes umfasst:
einen oder mehrere Speicherbereiche zum Aufrechterhalten eines lokalen Datenspeichers von Objektdaten für mehrere Objekte;
einen oder mehrere Prozessoren, die gemeinsam dazu ausgelegt sind, das Verfahren nach einem der Ansprüche 1-10 durchzuführen.

12. Ein oder mehrere computerlesbare Medien, auf denen Anweisungen gespeichert sind, die, wenn sie von einem oder mehreren Prozessoren eines Client-Geräts ausgeführt werden, veranlassen, dass der Client das Verfahren gemäß einem der Ansprüche 1 bis 10 ausführt.

## Revendications

1. Procédé mis en œuvre par ordinateur pour maintenir dynamiquement des mises à jour d'objet stockées sur un dispositif client, le procédé comprenant les faits :
de stocker, dans un composant de stockage de données associé au dispositif client, des données d'objet associées à un ou à plusieurs objets ;
de surveiller (501) une interaction utilisateur avec l'un ou les plusieurs objets ;
de détecter (502) un ou plusieurs événements de déclenchement indiquant un changement d'interaction utilisateur avec un objet de l'un ou des plusieurs d'objets ;
de générer (503, 507) une demande de modification d'abonnement sous forme de demande d'abonnement ou de désabonnement, dans lequel la demande de modification d'abonnement est générée pour l'objet sur la base au moins en partie de l'un ou des plusieurs événements de déclenchement, un événement de déclenchement identifiant un changement apporté à un ou à plusieurs objets à l'intérieur d'une interface utilisateur graphique du dispositif client, dans lequel l'événement de déclenchement comprend une action parmi
déplacer l'un ou les plusieurs objets entre une partie visible et une partie cachée de l'interface utilisateur graphique,
déplacer un ou plusieurs objets à travers une limite d'une partie visible d'une interface utilisateur graphique, ou
se déplacer entre un affichage et un autre ;
de maintenir dynamiquement des données d'abonnement pour le dispositif client au niveau d'une plate-forme informatique à distance sur la base de la demande de modification d'abonnement ; où les données d'abonnement identifient des objets abonnés de l'un ou des plusieurs objets pour le dispositif client ;
de transmettre (504) la demande de modification d'abonnement à la plate-forme informatique à distance pour demander une modification de données d'objet transmise au dispositif client concernant l'objet ; et
de transmettre (504) des mises à jour de données d'objet d'objets abonnés depuis la plate-forme informatique à distance au dispositif client.

2. Procédé mis en œuvre par ordinateur de la revendication 1, dans lequel l'un ou les plusieurs événements de déclenchement comprennent l'action de déplacer l'objet entre une partie visible et une partie cachée d'une interface utilisateur graphique.

3. Procédé mis en œuvre par ordinateur de quelconques des revendications 1 et 2, dans lequel l'un ou les plusieurs événements de déclenchement comprennent l'action de déplacer l'objet à travers une limite d'une partie visible d'une interface utilisateur graphique.

4. Procédé mis en œuvre par ordinateur de quelconques des revendications 1 à 3, dans lequel, lors de la détection d'un déplacement de l'objet depuis une partie cachée jusqu'à une partie visible d'une interface utilisateur graphique, la demande de modification d'abonnement comprend la demande d'abonnement concernant l'objet pour débuter un abonnement concernant l'objet.

5. Procédé mis en œuvre par ordinateur de quelconques des revendications 1 à 3, dans lequel, lors de la détection d'un déplacement de l'objet depuis une partie visible jusqu'à une partie cachée d'une interface utilisateur graphique, la demande de modification d'abonnement comprend une demande de désabonnement concernant l'objet pour terminer un abonnement concernant l'objet.

6. Procédé mis en œuvre par ordinateur de quelconques des revendications 1 à 5, dans lequel la demande de modification d'abonnement comprend un type indiquant si la demande de modification d'abonnement est une demande d'abonnement ou une demande de désabonnement, et dans lequel le type est déterminé sur la base au moins en partie du cas où l'objet serait ou non visible à l'intérieur d'une partie d'une interface utilisateur graphique.

7. Procédé mis en œuvre par ordinateur de quelconques des revendications 1 à 6, dans lequel la demande de modification d'abonnement inclut au moins un élément parmi un identifiant de demande, un type d'abonnement associé à un routage de message ou à un type d'objet, ou des informations associées à l'objet.

8. Procédé mis en œuvre par ordinateur de quelconques des revendications 1 à 7, dans lequel la demande de modification d'abonnement inclut un identifiant de version indiquant une version des données d'objet.

9. Procédé mis en œuvre par ordinateur de quelconques des revendications 1 à 8, comprenant en outre le fait de recevoir une mise à jour des données d'objet en réponse au fait de transmettre la demande de modification d'abonnement à la plate-forme informatique à distance.

10. Procédé mis en œuvre par ordinateur de quelconques des revendications 1 à 9, dans lequel l'un ou les plusieurs événements de déclenchement sont détectés sur la base au moins en partie de connectivité entre le dispositif client et la plate-forme informatique à distance.

11. Dispositif client (101A, 101N) pour maintenir dynamiquement des mises à jour d'objet stockées sur le dispositif client, le dispositif client comprenant :
une ou plusieurs zones de stockage de mémoire pour maintenir un stockage de données local de données d'objet pour une pluralité d'objets ;
un ou plusieurs processeurs configurés collectivement pour effectuer le procédé de quelconques des revendications 1 à 10.

12. Support ou supports lisible(s) par ordinateur, stockant des instructions qui, lorsqu'elles sont exécutées par un ou plusieurs processeurs d'un dispositif client, amènent le client à effectuer le procédé de quelconques des revendications 1 à 10.
